# EUROPEAN PATENT APPLICATION

(11) **EP 4 741 450 A1**
(43) Date of publication of application: **13.05.2026**
(21) Application number: 24461633.0
(22) Date of filing: 08.11.2024
(51) Int. Cl.: C08J 11/06

(54) **A SYSTEM AND METHOD OF REMOVING IMPURITIES FROM WASTE POLYMER RAW MATERIAL**

(71) Applicant: T&R BIOEKO Sp. z o.o., 54-611 Wroclaw (PL)
(72) Inventor: Termanowski, Tomasz, 32-080 Zabierzow (PL); Chmielnicki, Blazej, 43-173 Laziska Gorne (PL)
(74) Representative: Czarnik, Maciej

(57) **Abstract**

A system for the removal of impurities from waste polymer raw material, characterised in that it comprises the following components: raw material racks (1), PH vessels (2), a reactor vessel (3), buffers (4), a vacuum pump unit and a cyclone (5), a silo for unsuitable material (6), a silo for purified material (7), wherein the PH vessels (2) are located above the reactor vessel (3), the buffers (4) are located under the reactor vessel (3), the vacuum pump unit and the cyclone (5) are located next to the reactor vessel (3), the silos for unsuitable material (6) and purified material (7) are located under the buffers (4). A method of removing impurities from waste polymer raw material, characterised in that it is implemented using the system for the removal of impurities from waste polymer raw material.

## Description

The present invention relates to a system for the removal of impurities from waste polymer raw material and a method of removing impurities from waste polymer raw material implemented using this system.

Polyethylene terephthalate (PET) is a plastic material that belongs to the polyester group and which, due to its favourable physical properties, has found a wide range of applications, such as the production of packaging for foodstuffs, cosmetics and industrial products. PET's popularity as a packaging material derives from a number of important properties of this polymer, notably its glass-like transparency and low weight, which, combined with its flexibility and mechanical resistance, makes PET packaging shatterproof. It provides a good barrier to gases, which allows PET to be used in the production of packaging materials used for the packing and storage of carbonated beverages. PET can also be used in combination with other materials, such as textile raw materials, to enhance the strength of fabrics.

Polyethylene terephthalate was first discovered in the 1950s. It was initially used for the production of thin films and was later modified and strengthened with the addition of glass fibre. New technologies were introduced in the production of PET at the start of the 1970s, which facilitated the production of a plastic material that had a triaxial orientation of the polymer structure, to achieve a product that resembles glass in appearance, but is much lighter and unbreakable. This development led to the widespread use of this plastic as a packaging material as a substitute for glass packaging. Polyethylene terephthalate, because of its high molecular weight, has good mechanical properties that give it suitable flexibility. It is also characterised by a hard surface, good sliding and dielectric properties, as well as chemical resistance to weak acids and alkaline solutions, oils and fats. It is not resistant to concentrated acids and alkaline solutions, or to prolonged exposure to hot water. The sterilisation of PET products is carried out in an ethylene oxide atmosphere, or by irradiation.

PET is obtained through the reaction of terephthalic acid (PTA) or its dimethyl terephthalate (DMT) ester with ethylene glycol (EG) in the presence of a metallic catalyst.

Antimony trioxide is most often used as this catalyst, although titanium, germanium, cobalt, manganese, magnesium and zinc salts can also be used. A certain amount of catalyst may remain in the final product, which must be taken into account when assessing the healthiness of products manufactured using this polymer. PET, a polymer with a high molecular weight of approximately 25,000, is obtained during the second polycondensation phase. Volatile impurities, acetaldehyde and free glycols are removed during this process. Ethylene glycol residues are removed via vacuum distillation, while terephthalic acid is removed by way of multiple crystallisation. Once the polymer has been formed, it is very difficult to remove residual impurities from it, so it is essential to use base raw materials of sufficient purity for the production of polymers, with the aim of obtaining quality levels that are required in food packaging materials.

PET is usually processed by way of injection moulding at 260-290°C, while films, sheets and fibres are formed by way of extrusion. In order to improve its mechanical strength, films are subjected to biaxial orientation by way of stretching. PET belongs to the group of semi-crystalline polymers that, when heated to temperatures above approximately 70°C, melt from a hard, glass-like material into a flexible, rubber-like structure (rubbery state). In this form, macromolecular polymer chains can be formed by stretching in one direction to form fibres, or in two directions to produce films or bottles. The rapid cooling of the material results in its solidification, which allows the permanent formation of packaging such as bottles, jars, containers.

Keeping the material in a stretched state at temperatures above approx. 70°C leads to its gradual crystallisation, and as a result it becomes more opaque, more brittle and less elastic. In this form, it is known as crystalline PET (CPET), a plastic that is more heat-resistant and is used in the production of trays and containers used in the catering industry as disposable packaging.

The therfmoforming process involves the use of PET that contains a small amount of the isophthalic acid comonomer, or APET. APET products gradually crystallise when heated above the glass transition temperature, or when subjected to slow cooling.

PETG (a copolymer of terephthalic acid with two ethylene glycols and cyclohexanedimethanol) is an amorphous polyester in all conditions. In comparison with APET, the comonomer content in PETG is higher and can reach up to 30%. PETG has good optical properties, but poorer barrier properties and is easier to process, mainly due to its lower softening point. PETG is used for the production of rigid films for thermoforming and bottles, obtained using preforms by blow moulding.

PET bottles are formed in the course of a two-stage injection and blow moulding process combined with biaxial orientation. However, numerous modifications are used during the manufacturing process in order to obtain product properties suitable for a variety of applications. This usually involves the modification of the polymer form in order to obtain different crystalline forms of PET. The low content of the isophthalic acid comonomer, for example, reduces the range of crystallinity and allows the production of bottles with thicker walls, sheets and films. Increasing the range of crystallinity results in the reduced deformation of products in higher temperatures.

Although the primary processing method for PET is injection moulding and extrusion, PET elements can also be made using ultrasonic welding, friction welding, heated tool welding or hot gas welding. It can also be glued successfully using cyanoacrylate and epoxy adhesives. The physical and chemical properties of PET do not require the supplementation of this plastic with any additional plasticisers, antioxidants or stabilisers. Depending on the forming technology, polyethylene terephthalate can be used to produce bottles, jars, containers, trays or thin oriented films used for the production of bags, wherein the properties of these products depend on the temperature and duration of the final forming of the product.

Recycling is an economically pointless exercise if uses up more energy than the amount of energy that can be recovered, or if it generates more environmental pollution than waste landfilling, or if there is no demand for the recycled products. In terms of cost-effectiveness, the most reasonable method is material recycling, followed by chemical recycling and incineration.

Landfilling is still a common solution in the field of waste management. Although the amount of waste disposed in landfills is steadily decreasing, it is still high compared to other methods of waste management. Landfilling, from an economic and environmental point of view, is the least rational method of waste disposal. Improperly prepared landfill sites are a problem that causes the affected land to be permanently taken out of use, as most macromolecular plastics decompose over a very long period of time in natural conditions. The opinion on the landfilling of plastic waste is currently very clear, i.e. landfilling is believed to be a necessary evil that must be reduced to an absolute minimum for environmental, as well as economic reasons. New EU recommendations envisage the complete elimination of this method of managing recyclable waste in the near future. This necessitates more intensive efforts to find new ways of re-using already produced materials and generates a favourable environment for the development of recycling methods. This approach is also very important in the context of the rational management of natural resources. The human species is currently on the verge of exhausting the industrially exploitable reserves of oil, gas and coal - the basic raw materials needed for the synthesis of polymeric materials.

Chemical recycling, also known as feedstock recycling, involves the breakdown of polymer plastic particles into lighter particles using the process of pyrolysis, methanolysis, glycolysis, hydrolysis or hydrogenation. These particles can then be used as raw materials for the production of other or the same chemical products (including petrochemicals). Systems for the chemical recycling of polymeric plastics facilitate the production of monomers from used, degraded polymers in order to produce fully-valuable raw materials. Contrary to the material recycling method, the properties of the final material are not inferior to those of the waste material that was used to make it.

This method of polymeric waste recycling is most commonly used for the recovery of polyethylene terephthalate (PET). The main problem with the large-scale utilisation of the chemical recycling method for the recovery of monomers that would facilitate the re-synthesis of the polymer is the complexity of the system and the significant investment involved. Polyethylene terephthalate is particularly resistant to long-term exposure to atmospheric conditions. PET waste is not biodegradable or naturally decomposable and maintains its unchanged form in landfills, representing a very problematic and persistent environmental pollutant. PET is widely used as a raw material for the production of many different products, due to very good physical and mechanical properties. PET does not represent a direct environmental hazard, nevertheless it is considered to be a particularly problematic material due to its ubiquity as a waste material and its resistance to chemical and biological factors. The introduction of large-scale PET recycling would be therefore beneficial for economic, environmental and legal reasons.

Polyethylene terephthalate can be recycled relatively easily using all polymer material recycling methods. PET can be recovered using material recycling, feedstock recycling and energy recycling processes.

Feedstock recycling is often the method of choice for PET recovery. This process is based on the chemical degradation of the polyester chain in order to obtain oligomeric or low-molecular-weight substances, preferably compounds that are substrates in the PET synthesis. The most effective PET recycling methods include hydrolysis, alcoholysis, methanolysis, aminolysis and glycolysis. The method of hydrolytic recycling of PET in an alkaline environment is based on the treatment of polyethylene terephthalate with appropriate hydroxides such as sodium and potassium, or an aqueous ammonia solution, usually in high pressure and temperature conditions. The main products of this process include terephthalic acid (TA) and ethylene glycol (EG). Terephthalic acid and ethylene glycol are both commonly used in many areas of life. In the alkaline depolymerisation process, shredded or cut polyethylene terephthalate waste material is fed into a reactor. The process most often involves the use of a potassium base and an aqueous ammonia solution. The alkaline depolymerisation process leads to the complete separation of the terephthalic acid (TA) salts of ammonium or potassium, respectively, followed by the precipitation of terephthalic acid and glycol. The use of a potassium base and ammonia water enables the production of valuable fertiliser products, such as ammonium or potassium sulphate. Due to the alkaline environment, terephthalic acid in the form of diammonium or dipotassium salt is initially obtained.

Another form of chemical recycling is the conversion of waste polymer plastics into useful raw materials that are used in various technological processes. The most common method of feedstock recycling of waste polymer plastics in our country is pyrolytic cracking. The products of this process are gaseous and liquid hydrocarbons, which are used as fuel (pyrolysis gas), or in liquid form as liquid fuel modifiers. The main advantage of this method is the possibility of the processing of waste that cannot be processed using the material recycling method, e.g. contaminated material, material mixed with non-polymer waste, or materials made up of many different types of macromolecular plastics.

Feedstock recycling of PET involves the utilisation of hydrolysis, alcoholysis or glycolysis to obtain low-molecular-weight initial compounds, which are then used for the re-synthesis of PET. Alcoholysis is carried out using alkaline catalysts (i.e. sodium acetate) in the temperature of 150 - 250°C for approximately 4 hours. Acidic catalysts ensure that the reaction is completed in 10 - 35 minutes in temperatures as low as 60 - 95°C. The type of catalyst used has less effect on the course of reaction than the applied pressure. Pressures between 20 - 70 atm and temperatures between 160 - 240°C are used in order to achieve monomer yields of 99%.

The nature of pyrolysis of plastics is similar to that of the coking of coal, or heavy distillates and petroleum processing residues. High temperature in the polymer molecule results in the severing of chemical bonds and the production of free radicals. As a result of their recombination, gaseous liquid products and a charred solid residue are generated. The proportion of the generated volatile products to the solid residue depends on the properties of the raw material subjected to pyrolysis and on the conditions in which the process is carried out. The thermal degradation of most polymers starts at 150-200°C and ends at approx. 400°C. The process of pyrolysis requires the use of a special furnace structure that is resistant to corrosive agents, a sealed system for the intake of purification products and the condensation of volatile products. This kind of recycling is therefore not always cost-effective. The decomposition of PET does not generate any liquid products, while the generated light yellow residue, which probably contains benzoic acid and terephthalic acid, causes the clogging up of the reactor outlet. In terms of their chemical composition, most plastic waste materials resemble heavy petroleum distillation residues and can therefore be converted into liquid fuels using refining methods such as liquefaction. This process involves the thermal degradation of polymer chains into waxes and oils in mild conditions.

Polymer plastic waste can also be converted into synthesis gas needed for the production of pig iron in steel mills.

Another method of utilising plastic waste, especially polyethylene terephthalate waste, is the production of activated carbons on the basis of such waste. Such adsorbents could be used, for example, in the pre-treatment of wastewater, thus solving two environmental problems. On one hand, this process would reduce the amount of waste material and, on the other hand, it would facilitate the treatment of wastewater or industrial effluents. The additional advantage of such carbon adsorbents is their relatively low production cost. Such absorbents would resolve the problem of their regeneration, wherein they could be incinerated, i.e. subject to an energy recovery process, after the adsorption process.

Energy recycling represents an alternative to material and chemical recycling processes. This form of utilisation of macromolecular plastic waste, however, has gained much controversy. There are very different opinions on the incineration of plastic waste. Due to the high calorific value of such waste, which in the case of polyethylene, for example, far exceeds that of coal, the utilisation of heat generated during its incineration is energetically reasonable. However, the main disadvantage of incineration is that the products of this process may heavily pollute the environment. The elimination of such pollution requires the construction of complex, and therefore expensive, incineration and flue gas treatment installations. In order to avoid the emission of hydrocarbons into the atmosphere, PET incineration processes must be carried out at temperatures of more than 750-1000 °C, which requires the use of advanced technologies and materials. It also requires the consumption of more oil and gas in order to achieve such high temperatures. Incineration products generated in this process do not contain any volatile hydrocarbons, because all organic compounds break down in such temperatures. The existing technical level of the design of waste incineration plants ensures their compliance with the maximum pollution levels defined in environmental pollution standards. In the case of polymeric plastic material, incineration is advisable once this material has completed the entire material cycle from the moment of its production to its final use - whereupon it reaches a state in which, due to its degradation or condition, it cannot be re-cycled with a positive economic and environmental effect. Energy accumulated in polymeric waste systems can be recovered by oxidising it to obtain carbon dioxide and water, i.e. to utilise the waste directly as fuel due to its high calorific value of approximately 35 MJ/kg, whereupon it can be used as highly-calorific solid fuel. PET waste has lower calorific value of up to approximately 23 MJ/kg. The direct incineration of plastic waste in typical grate and fluidised bed furnaces is technically problematic, partly due to the thermoplastic nature of this waste. This fact is reflected in the cladding of chamber and grate walls of the furnaces. However, such waste can be incinerated together with other municipal waste. In order to protect the environment, incineration processes require the use of appropriately designed combustion chamber burners, as well as a suitable flue gas recirculation and afterburning system. In order to completely eliminate the formation of toxic substances and, above all, dioxins and polycyclic aromatic hydrocarbons, which have strong carcinogenic effects, these processes should be introduced at a temperature of at least 1200°C with flue gas recirculation to the combustion chamber, whereas during the final stage, flue gas must be thoroughly treated before being released into the atmosphere. During the incineration process, the temperature has to be maintained above the minimum process temperature. The waste has to remain in the combustion zone for at least two seconds at a temperature of more than 850°C, with the oxygen content of more than 6%.

Nevertheless, the material recycling method is economically and ecologically the best way of utilising most types of polymer waste. This especially applies to industrial waste, which is usually free of any impurities and its composition and properties are well known. But adequately prepared post-consumer waste can also be perfectly suitable for processing using this method. The group of post-consumer waste types that can be classified as recyclable material includes primarily waste that is made up of a uniform type of plastic material, mixed waste with a known and repetitive composition, as well as mixed and contaminated waste whose sorting and treatment is cost-effective. The disadvantage of the material recycling method is that it can only be used in the case of thermoplastic waste. Due to the chemically irreversible cross-linking reaction present in cured materials, it is impossible to re-plasticise them and use them for the production of new products. There is also the problem of reinforcement in the form of fibres and fabrics, which are often used to improve the mechanical properties of composites. However, this type of waste can be fragmented and then reused as fillers.

Recycled materials used as a raw material for the production of a given product must have a defined and constant composition. It is believed that potentially useful are plastic materials obtained from waste recycling processes that include: the separation from other materials, selection according to polymer type, fragmentation, cleaning and washing, segregation according to density in order to separate plastics that contaminate the main fraction, drying and granulation of the milled material, modification and improvement of recycled material. Numerous studies have shown that the mechanical and functional properties of recycled plastics are inferior to those of the original materials, because of:
- the presence of impurities that cannot be eliminated during the cleaning process,
- chemical degradation due to ageing in the course of the service life of products,
- thermal degradation of polymers during successive processing cycles,
- the mixing of different polymers, or even different types of the same polymer, together,
- the presence of modifiers and fillers.
Due to the above, recycled plastics cannot be normally used for the production of many products, e.g. those in direct contact with foodstuffs, where compliance with sanitary requirements is necessary, or where high repeatability of functional properties and decorative qualities is needed. The deterioration of physical-mechanical parameters of the recycled materials can be observed mainly in the form of lower strength parameters and higher brittleness. The above factors have a negative effect on the functional properties of plastics recycled using most of the known methods, which reduces the possibility of their cost-effective use.

In the case of their re-processing, most polymers demonstrate the gradual deterioration of their properties. Recycled materials mixed with original plastics also reduce the scope of their application. It is therefore generally believed that recycled plastics should not be used for the production of goods that are intended to have a short product life and will soon turn into waste again and will require disposal or processing. They should instead be used for the production of products with a long lifespan, that can be easily collected following the end of their product life or after dismantling for final disposal by way of energy recycling.

Polyethylene terephthalate is one of the most commonly used polymeric materials. According to the available data, in Europe it accounts for approximately 10% of the total weight of processed plastics. But it is also used for the production of goods with a short product life, mainly packaging materials. In effect it very quickly turns into waste, and as a result humankind is currently facing the problem of the utilisation and disposal of this plastic material. The present invention relates to the technology developed for the purification of post-consumer packaging waste made of polyethylene terephthalate, in order to obtain a recycled raw material having properties similar to those of a commercial material, suitable for being re-used for the production of food contact packaging.

Polyethylene terephthalate can be recycled using many different methods, but in terms of the economic and environmental aspects, not all PET waste recycling and processing methods are equal. In economic terms, energy recovery is the least favourable recycling process. During the incineration of polymeric plastics, some of the energy accumulated in the raw material is recovered. However, due to the low efficiency of energy recovery devices, as well as due to the need of using additional energy sources such as coal, gas or oil in these kinds of processes, no more than approximately 30-40% of the energy accumulated in the material can be recovered. Therefore energy recycling should only be used in the case of plastics that cannot be recycled by other means, e.g. heavily contaminated plastics that are impossible or uneconomic to clean, or mixtures of different types of plastics and other waste types, where the separation of the individual fractions is too problematic. It should also be noted that systems for the energy recycling of polymeric plastics require very high investments, which elevates the costs of waste utilisation using this method. Energy recycling of polyethylene terephthalate should be complementary to other recycling methods, intended solely to process waste unsuitable for use with other technologies.

Polyethylene terephthalate is a type of polymer that is very highly resistant to degradation in the natural environment. This means that PET waste will remain in its unchanged form in the environment for hundreds of years. Simultaneously, this polymer can be subjected to a series of chemical reactions so as to transform it into technically useful chemical compounds.

In the case of polyethylene terephthalate waste, the most favourable recycling method is material recovery, which allows the polymer to be recovered from the waste in a cost-effective and technically reasonable way. Material recycling enables the conversion of waste plastic into a re-usable form at the lowest financial and energetic cost. In the case of polyethylene terephthalate, this method is particularly favourable due to the usually short lifespan of products made using this polymer. Such products usually do not experience any degradation during their short lifespan, which allows this material to be re-used successfully. The short lifespan of these products means that they do not experience any thermal or mechanical degradation or oxidation, which could lead to the deterioration of the physical and mechanical properties of the recycled material. The main problem during the process of material recycling of all plastics, including polyethylene terephthalate, is the elimination of all kinds of mechanical and, above all, chemical impurities that negatively affect the physical and mechanical properties of re-granulated products made using this type of contaminated waste.

Recycled materials, due to the fact that they may have absorbed many hazardous chemical compounds in their structure that may subsequently migrate, cannot in principle be used for the production of food contact products. In the case of polyethylene terephthalate, this problem is currently being resolved by the production of multilayer films using coextrusion, wherein the outer layer is made of original (commercial) plastic, while the core of the thickness of approximately 50-60% of the product thickness is extruded from purified recycled plastic. This methodology enables the use of such products in food contact applications, but generates numerous technological problems connected with the need to maintain a constant and continuous layer of original plastic that protects the products from coming into contact with potentially hazardous recycled plastic. The migration of harmful substances, including those generated during the thermal processing of recycled material via extrusion or injection moulding, depends on a number of factors, such as the moisture content and pH level of the packaged products. The production of multilayer films using a core made of recycled polymeric material is undoubtedly one way of reducing waste, but the need to use original material also increases the amount of waste and the consumption of petrochemical raw materials needed for the synthesis of original polyethylene terephthalate.

The aim of the invention was to develop a system for the effective purification of waste polymer raw material and to obtain highly-pure polymer material. Another aim was to develop a method for the purification of waste polymer raw material with the use of the aforementioned system. In particular, the aim of the invention was to develop a method for the purification of waste polymer raw material, to develop a system and a method of recycling PET waste that would enable its complete purification from any impurities to a level that would allow the final product to obtain a certificate stating that it can be used for the production of food contact products, and thus avoiding the use of the coextrusion method, which requires the product manufacturing line to be equipped with additional extruders for the plasticisation and extrusion of the original polyethylene terephthalate needed for the coating of the product core made of recycled PET polymer.

The object of the invention consists of a system for the removal of impurities from waste polymer raw material, characterised in that it comprises the following components: raw material racks, PH vessels, a reactor vessel, buffers, a vacuum pump unit and a cyclone, a silo for unsuitable material, a silo for purified material. Wherein the PH vessels are located above the reactor vessel. The buffers are located under the reactor vessel. The vacuum pump unit and cyclone are located next to the reactor vessel. The silos for unsuitable material and purified material are located under the buffers.

The reactor vessel is preferably made of metal.

The ratio between the height of the reactor vessel and its diameter is preferably between 3:2 and 5:1, while the volume of the reactor vessel is between 0.1 m³ and 7 m³.

The bottom of the reactor vessel is preferably provided with a connection for the feeding of gas used in the process of the removal of impurities from the waste polymer raw material.

According to another aspect, the object of the invention comprises the method of removing impurities from waste polymer raw material, characterised in that it is implemented using the above-mentioned system in the course of the following steps: the raw material is hung on the racks. The raw material is then hauled to the PH vessels, where it is heated and cleaned of any dust. The dust is fed into the cyclone. After reaching a preset initial temperature, the raw material is then discharged into the reactor vessel. In the vessel, the raw material is heated to a higher temperature in vacuum conditions. The raw material is then unloaded into the buffers. The raw material is then appropriately fed into the silo for unsuitable material, or into the silo for purified material.

The temperature of the heating process in the reactor is preferably between the temperature 40°C lower than the melting point of waste polymer and the temperature of the melting point of the waste polymer.

The waste polymer raw material is preferably polyethylene terephthalate (PET) obtained from food trays and the temperature of the heating process in the reactor is between 180°C and 230°C.

The value of vacuum in the reactor chamber is preferably between 0.1 mbar and 1 bar.

The used gas is preferably a noble gas or an inert gas.

The used gas is preferably selected from a group consisting of nitrogen, argon, carbon dioxide.

The flow rate of gas through the device per one unit of the reactor base area is preferably between 100 ml/min·m² and 50 l/min·m².

The duration of the process is preferably between 5 min and 240 min.

The present invention is advantageous in that it presents a system and a method of its application, in order to provide an efficient way of removing impurities from waste polymer raw material, in particular from PET. The system and method according to the invention enable the removal of impurities that would otherwise prevent the re-use of the raw material. Following the completion of the purification process, the plastic can be fed directly into the extruder to produce a high-quality final product in the form of a single-layer film, for example, which reduces the possibility of the re-contamination of the raw material and, above all, has a positive impact on the energy efficiency of the process. Following the purification process according to the invention, the raw material has a high melting point and almost no moisture, which eliminates the need of its drying and reduces the heating energy needed for the plasticisation of the processed polymer.

The object of the invention is illustrated in the embodiments, which do not limit its scope, and in the drawing wherein:

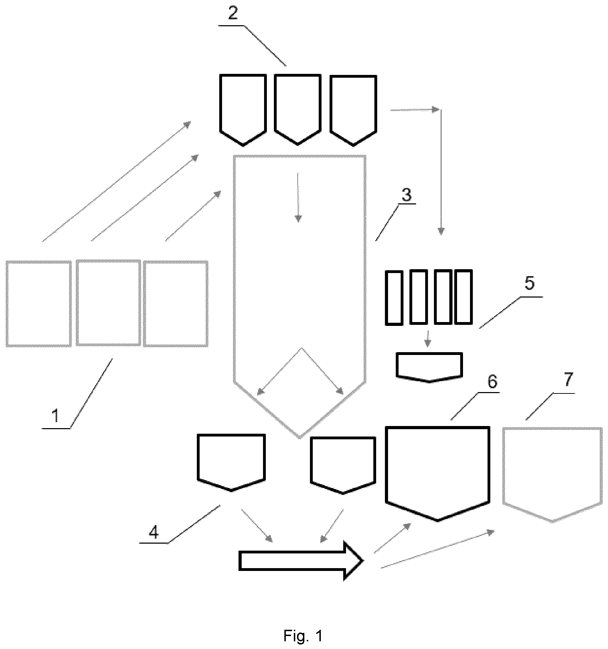

- Fig. 1: shows a diagram of the system for the removal of impurities from waste polymer raw material.

### Example 1

The system for the removal of impurities from waste polymer raw material is characterised in that it comprises the following components: three raw material racks, three PH vessels, a reactor vessel, two buffers, a vacuum pump unit and a cyclone, a silo for unsuitable material, a silo for purified material. The three PH vessels are located above the reactor vessel. The two buffers are located under the reactor vessel. The vacuum pump unit and cyclone are located next to the reactor vessel. The silos for unsuitable raw material and for the re-generated raw material are located under the buffers.

### Example 2

The method for the removal of impurities from waste polymer raw material implemented with the use of the system mentioned in the first embodiment of the invention consists of the following steps: first, the raw material obtained from PET trays is hung on the three racks. This raw material is then hauled to the three PH vessels, where it is heated and cleaned of any dust. The dust is fed into the cyclone. When the temperature of the raw material reaches a preset initial temperature value of 145°C, it is fed into the main reactor vessel. The raw material is further heated in this vessel for about 1.5 hours to a higher temperature of 180°C, in vacuum conditions of 4 mbar. This removes any harmful compounds and dust from the raw material. After this time, i.e. after 1.5 hours, the raw material begins to be unloaded into two buffer vessels located underneath the main vessel. Then, when these buffer vessels are filled with the raw material, it is either unloaded into the silo for re-generated and purified raw material or, if the required parameters are not achieved, into the silo for unsuitable raw material.

## Claims

1. A system for the removal of impurities from waste polymeric raw material, **characterised in that** it consists of raw material racks (1), PH vessels (2), a reactor vessel (3), buffers (4), a vacuum pump unit and a cyclone (5), a silo for unsuitable material (6) and a silo for purified material (7), wherein the PH vessels (2) are located above the reactor vessel (3), the buffers (4) are located under the reactor vessel (3), the vacuum pump unit and the cyclone (5) are located next to the reactor vessel (3), the silos for unsuitable material (6) and purified material (7) are located under the buffers (4).

2. The system according to claim 1, **characterised in that** the reactor vessel (3) is made of metal.

3. The system according to any one of claims 1 to 2, **characterised in that** the ratio between the height of the reactor vessel and its diameter is between 3:2 and 5:1, while the volume of the reactor vessel is between 0.1 m³ and 7m³.

4. The system according to any one of claims 1 to 4, **characterised in that** the bottom of reactor vessel (3) is preferably provided with a connection for the feeding of gas used in the process of the removal of impurities from the waste polymer raw material.

5. A method for the removal of impurities from waste polymeric raw material, **characterised in that** it is implemented using the system according to claims 1 to 4 in accordance with the following steps:
a) the raw material is hung on racks (1) and then;
b) the raw material is hauled into PH vessels (2), where it is heated and cleaned of any dust, wherein the dust is fed into cyclone (5), then;
c) after reaching a preset initial temperature, the raw material is discharged into reactor vessel (3);
d) In vessel (3), the raw material is heated to a higher temperature in vacuum conditions, then;
e) the raw material is unloaded into buffers (4) and then
f) the raw material is appropriately fed into the silo for unsuitable material (6), or into the silo for purified material (7).

6. The method according to claim 5, **characterised in that** the temperature of the heating process in the reactor is between the temperature 40°C lower than the melting point of waste polymer and the temperature of the melting point of the waste polymer.

7. The method according to claim 11, **characterised in that** the waste polymer raw material is polyethylene terephthalate (PET) obtained from food trays and the temperature of the heating process in the reactor is between 180°C and 230°C.

8. The method according to any one of claims 10 to 12, **characterised in that** the value of vacuum in the reactor chamber is between 0.1 mbar and 1 bar.

9. The method according to any one of claims 10 to 13, **characterised in that** the used gas is a noble gas or an inert gas.

10. The method according to claim 14, **characterised in that** the used gas is selected from a group consisting of nitrogen, argon, carbon dioxide.

11. The method according to any one of claims 10 to 15, **characterised by the fact that** the flow rate of gas through the device per one unit of the reactor base area is between 100 ml/min·m² and 50 l/min·m².

12. The method according to any one of claims 10 to 16, **characterised in that** process times range from 5 min to 240 min.
